# EUROPEAN PATENT APPLICATION

(11) **EP 4 834 676 A1**
(43) Date of publication of application: **04.11.2026**
(21) Application number: 24915136.6
(22) Date of filing: 23.12.2024
(51) Int. Cl.: B60T 7/06, B60T 8/40, B60T 11/16, B60T 7/04, B60T 8/32, B60T 11/18, B60T 17/22

(54) **PEDAL SIMULATOR MODULE, BRAKE MASTER CYLINDER ASSEMBLY, BRAKE SYSTEM AND VEHICLE**

(30) Priority: 02.01.2024 CN 202420023203 U
(71) Applicant: BYD Company Limited, Shenzhen, Guangdong 518118 (CN)
(72) Inventor: LI, Yihui, Shenzhen, Guangdong 518118 (CN); YAO, Yugang, Shenzhen, Guangdong 518118 (CN); YANG, Peng, Shenzhen, Guangdong 518118 (CN); XIONG, Wei, Shenzhen, Guangdong 518118 (CN); JIANG, Huanan, Shenzhen, Guangdong 518118 (CN)
(74) Representative: Taor, Simon Edward William
(86) International application number: PCT/CN2024/141625
(87) International publication number: WO 2025/145921

(57) **Abstract**

A vehicle including a brake system is provided, where the brake system includes a brake master cylinder assembly. The brake master cylinder assembly includes a pedal simulator module, the pedal simulator module includes a base body and a pedal simulator, the base body is configured to be mounted on a brake master cylinder, the base body is provided with at least one master cylinder docking port, and the master cylinder docking port includes a first docking port. The first docking port is configured to dock with a first brake fluid port on the brake master cylinder, and the first brake fluid port communicates with a first fluid chamber in the brake master cylinder. The pedal simulator includes a movable piston and a first chamber located on one side of the movable piston. The pedal simulator is mounted on the base body. The first docking port communicates with the first chamber.

## Description

### CROSS REFERENCE TO RELATED APPLICATIONS

The present disclosure claims priority to Chinese Patent Application No. 202420023203.1, filed with the China National Intellectual Property Administration on January 2, 2024 and entitled "PEDAL SIMULATOR MODULE, BRAKE MASTER CYLINDER ASSEMBLY, BRAKE SYSTEM, AND VEHICLE", which is incorporated herein by reference in its entirety.

### TECHNICAL FIELD

The present disclosure relates to the field of brake technologies, and specifically, to a pedal simulator module, a brake master cylinder assembly, a brake system, and a vehicle.

### BACKGROUND

In a control system, a pedal simulator is usually provided to convert a braking force applied by a driver into an electrical signal. This allows the driver to receive feedback of the braking force, and further feeds back a magnitude of the braking force through a sensor to a controller, thereby implementing braking. In a related technology, a brake master cylinder is connected to the pedal simulator through a separate pipeline. However, the pipeline may interfere with components near the brake master cylinder or the pedal simulator, leading to difficulties in arrangement and installation. In addition, a relatively long length of the pipeline increases flow resistance of brake fluid between the brake master cylinder and the pedal simulator. This results in an excessively stiff brake pedal feel and, during continuous braking, may cause a gradual reduction in pedal travel, posing a risk of a brake failure.

### SUMMARY

The objective of the present disclosure is to provide a pedal simulator module, a brake master cylinder assembly, a brake system, and a vehicle, to solve the foregoing technical problems.

To achieve the foregoing objective, as a first aspect of the present disclosure, the present disclosure provides a pedal simulator module, including:
a base body, configured to be mounted on a brake master cylinder, the base body being provided with at least one master cylinder docking port, the master cylinder docking port including a first docking port, the first docking port being configured to dock with a first brake fluid port on the brake master cylinder, and the first brake fluid port communicating with a first fluid chamber in the brake master cylinder; and
a pedal simulator, including a movable piston and a first chamber located on one side of the movable piston, the pedal simulator being mounted on the base body, and the first docking port communicating with the first chamber.

Optionally, the pedal simulator module further includes a switching valve, the switching valve is mounted on the base body and is configured to selectively connect or disconnect a flow path between the first docking port and the first chamber.

Optionally, a first mounting cavity and a first flow passage are further provided in the base body, where the first flow passage includes a first sub-flow passage and a second sub-flow passage, the first docking port communicates with the first sub-flow passage, the first chamber communicates with the second sub-flow passage, an inlet of the switching valve is located in the first mounting cavity and communicates with the first sub-flow passage, and an outlet of the switching valve is located in the first mounting cavity and communicates with the second sub-flow passage.

Optionally, the base body is further provided with a first connection port, the first connection port is configured to connect to a brake actuator unit, and a second flow passage is further provided in the base body; and
an end that is of the first sub-flow passage and that is far away from the first docking port communicates with the first mounting cavity, the inlet of the switching valve communicates with the first mounting cavity, one end of the second flow passage communicates with the first mounting cavity, and another end of the second flow passage communicates with the first connection port.

Optionally, the base body is further provided with the first connection port, the first connection port is configured to connect to the brake actuator unit, the second flow passage is provided in the base body, one end of the second flow passage communicates with the first docking port, and another end of the second flow passage communicates with the first connection port.

Optionally, the pedal simulator further includes a second chamber located on a side that is of the movable piston and that faces away from the first chamber, the master cylinder docking port further includes a second docking port, a third flow passage is further disposed in the base body, one end of the third flow passage communicates with the second docking port, another end of the third flow passage communicates with the second chamber, the second docking port is configured to dock with a second brake fluid port on the brake master cylinder, and the second brake fluid port communicates with a fluid reservoir through an oil guide groove in the brake master cylinder.

Optionally, a second mounting cavity is further disposed in the base body, the pedal simulator includes a cylinder body, the movable piston is movably mounted in the second mounting cavity, at least a part of the cylinder body is located in the second mounting cavity, one side of the movable piston and a cavity wall of the second mounting cavity together define the first chamber, and another side of the movable piston, the cavity wall of the second mounting cavity, and the cylinder body together define the second chamber.

Optionally, the pedal simulator further includes an elastic member, the elastic member is located in the second mounting cavity, one end of the elastic member is connected to the movable piston, and another end of the elastic member is connected to the cylinder body.

Optionally, the master cylinder docking port further includes a third docking port, the third docking port is configured to dock with a third brake fluid port on the brake master cylinder, the third brake fluid port communicates with a second fluid chamber in the brake master cylinder, the base body is further provided with a second connection port, the second connection port is configured to connect to the brake actuator unit, a fourth flow passage is provided in the base body, and the third docking port communicates with the second connection port through the fourth flow passage; or
the base body is provided with an avoidance notch, the avoidance notch is configured to expose the third brake fluid port that is on the brake master cylinder and that communicates with the second fluid chamber in the brake master cylinder, for the third brake fluid port to be connected to the brake actuator unit through a pipeline.

Optionally, the switching valve and the pedal simulator are mounted on a same side of the base body.

Optionally, there are a plurality of master cylinder docking ports, and the plurality of master cylinder docking ports are located on a same side of the base body.

Optionally, the base body has a first abutment surface configured to abut against the brake master cylinder, the master cylinder docking port is located on the first abutment surface, and the first abutment surface is formed as a planar surface.

Optionally, the base body is provided with a seal groove, the seal groove is located outside the master cylinder docking port and surrounds the master cylinder docking port, and the seal groove is configured to mount a seal ring in the seal groove.

Optionally, the base body is provided with a mounting part, and the mounting part enables the base body to be detachably connected to the brake master cylinder.

Optionally, the mounting part is a mounting hole formed on the base body, and the mounting hole is configured for a fastener to pass through.

As a second aspect of the present disclosure, the present disclosure provides a brake master cylinder assembly, including a brake master cylinder and the foregoing pedal simulator module, where a first fluid chamber is disposed in the brake master cylinder, the brake master cylinder is provided with at least one brake fluid port, the at least one brake fluid port includes a first brake fluid port communicating with the first fluid chamber, the base body of the pedal simulator module is mounted on the brake master cylinder, and the first docking port on the base body is docked with the first brake fluid port.

Optionally, the at least one brake fluid port further includes a second brake fluid port, an oil guide groove is disposed in the brake master cylinder, the second brake fluid port communicates with a fluid reservoir through the oil guide groove, the pedal simulator further includes a second chamber located on a side that is of the movable piston and that faces away from the first chamber, and the second brake fluid port communicates with the second chamber; and/or
the brake fluid port further includes a third brake fluid port, a second fluid chamber communicating with the third brake fluid port is disposed in the brake master cylinder, and the third brake fluid port is configured to connect to a brake actuator unit.

Optionally, the brake master cylinder includes a second abutment surface configured to abut against the base body, the brake fluid port is located on the second abutment surface, and the second abutment surface is formed as a planar surface.

As a third aspect of the present disclosure, the present disclosure provides a brake system, including the foregoing brake master cylinder assembly and the brake actuator unit.

As a fourth aspect of the present disclosure, the present disclosure provides a vehicle, including the foregoing brake system.

During a brake process of a vehicle, a driver steps on a brake pedal, to cause brake fluid in the first fluid chamber of the brake master cylinder to flow out through the first brake fluid port, and the first docking port docked with the first brake fluid port is formed on the base body. The first docking port communicates with the first flow passage, so that the pressurized brake fluid flowing out from the first brake fluid port directly enters the first flow passage through the first docking port. Since the first flow passage communicates with the first chamber of the pedal simulator, the brake fluid from the first fluid chamber of the brake master cylinder thereby enters the first chamber of the pedal simulator, pushing the movable piston to move, thereby providing the driver with feedback of a brake force.

Through the foregoing technical solution, the pedal simulator is mounted on the base body, and the first docking port docked with the first fluid chamber of the brake master cylinder is disposed on the base body. The first docking port communicates with the first chamber of the pedal simulator, so that when the base body of the pedal simulator module is mounted on the brake master cylinder, connection between the first brake fluid port of the brake master cylinder and the first chamber of the pedal simulator is implemented. This eliminates the need to connect the first brake fluid port of the brake master cylinder to the first chamber of the pedal simulator through a separate pipeline during a mounting process, thereby simplifying a mounting procedure and reducing piping complexity of the brake system. In addition, a length of a connection flow path between the brake master cylinder and the pedal simulator is reduced, which lowers flow resistance of the brake fluid between the brake master cylinder and the pedal simulator. This avoids an excessively stiff brake pedal feel, and further allows the movable piston in the pedal simulator to return more promptly, thereby reducing a risk of a brake failure.

Other features and advantages of the present disclosure will be described in detail in the subsequent description of embodiments.

### BRIEF DESCRIPTION OF DRAWINGS

The accompanying drawings are intended to provide a further understanding of the present disclosure and constitute a part of the specification, and are used together with the following specific implementations to explain the present disclosure, but do not constitute a limitation on the present disclosure. In the accompanying drawings:
FIG. 1 is a schematic diagram of a three-dimensional structure of a pedal simulator module according to an embodiment of the present disclosure;
FIG. 2 is a schematic diagram of a three-dimensional structure of a pedal simulator module according to an embodiment of the present disclosure, where a perspective in FIG. 2 is different from that in FIG. 1;
FIG. 3 is a schematic diagram of a side view of a pedal simulator module according to an embodiment of the present disclosure;
FIG. 4 is a sectional view along a direction B-B in FIG. 3;
FIG. 5 is a schematic diagram of a side view of a pedal simulator module according to an embodiment of the present disclosure, where a perspective in FIG. 5 is different from that in FIG. 3;
FIG. 6 is a sectional view along a direction D-D in FIG. 5;
FIG. 7 is a sectional view along a direction A-A in FIG. 3;
FIG. 8 is a sectional view along a direction C-C in FIG. 3;
FIG. 9 is a top view of a brake master cylinder according to an embodiment of the present disclosure;
FIG. 10 is a sectional view along a direction E-E in FIG. 9;
FIG. 11 is an exploded view of a brake master cylinder assembly according to an embodiment of the present disclosure;
FIG. 12 is an exploded view of a brake master cylinder assembly according to another embodiment of the present disclosure;
FIG. 13 is a schematic diagram of a pipeline connection of a brake system according to an embodiment of the present disclosure;
FIG. 14 is a schematic diagram of a principle of a brake system according to an embodiment of the present disclosure; and
FIG. 15 is a block diagram of a structure of a vehicle according to an embodiment of the present disclosure.

### DESCRIPTION OF EMBODIMENTS

The particular implementations of the present disclosure will be described in detail below in combination with the accompanying drawings. It should be understood that the specific implementations described herein are merely intended to describe and explain the present disclosure and are not intended to limit the present disclosure.

In the present disclosure, unless otherwise specified, directional terms such as "upper" and "lower" are generally defined with reference to an orientation of a corresponding drawing. "Inside" and "outside" refer to the inside and the outside of a profile of a corresponding component. In addition, terms such as "first" and "second" are used merely for descriptive distinction and should not be understood as indicating or implying relative importance.

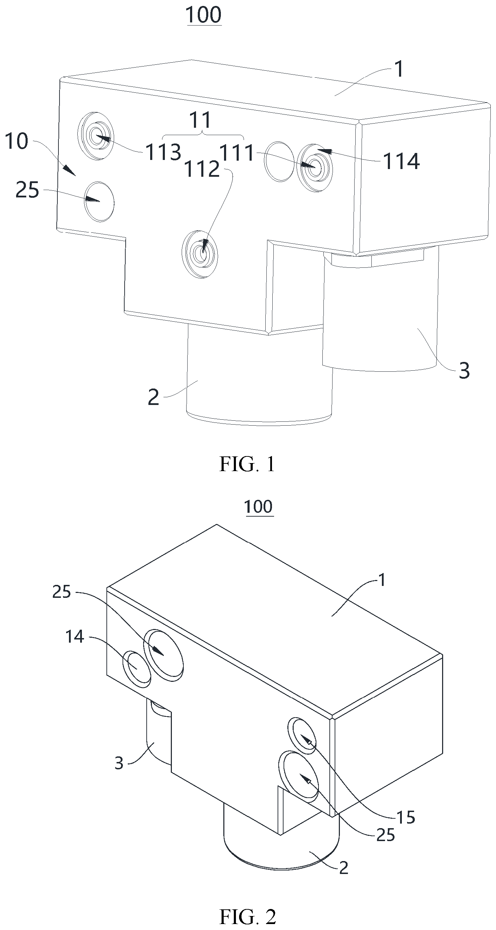

As a first aspect of the present disclosure, as shown in FIG. 1 to FIG. 8, the present disclosure provides a pedal simulator module 100, including a base body 1 and a pedal simulator 2. The base body 1 is configured to be mounted on a brake master cylinder 200, the base body 1 is provided with at least one master cylinder docking port 11, the master cylinder docking port 11 includes a first docking port 111, the first docking port 111 is configured to dock with a first brake fluid port 51 on the brake master cylinder 200, and the first brake fluid port 51 communicates with a first fluid chamber 4 in the brake master cylinder 200. The pedal simulator 2 includes a movable piston 21 and a first chamber 22 located on one side of the movable piston 21. The pedal simulator 2 is mounted on the base body 1. The first docking port 111 communicates with the first chamber 22.

During a brake process of a vehicle 600, a driver steps on a brake pedal to cause brake fluid in a first fluid chamber 4 of the brake master cylinder 200 to flow out through a first brake fluid port 51, and a first docking port 111 docked with the first brake fluid port 51 is formed on the base body 1. The pressurized brake fluid flowing out from the first brake fluid port 51 directly enters the first chamber 22 of the pedal simulator 2 through the first docking port 111. In this way, the brake fluid from the first fluid chamber 4 of the brake master cylinder 200 enters the first chamber 22 of the pedal simulator 2, pushing the movable piston 21 to move, thereby providing the driver with feedback of a brake force.

Through the foregoing technical solution, the pedal simulator 2 is mounted on the base body 1, and the first docking port 111 docked with the first fluid chamber 4 of the brake master cylinder 200 is disposed on the base body 1. The first docking port 111 communicates with the first chamber 22 of the pedal simulator 2, so that when the base body 1 of the pedal simulator module 100 is mounted on the brake master cylinder 200, connection between the first brake fluid port 51 of the brake master cylinder 200 and the first chamber 22 of the pedal simulator 2 is implemented. This eliminates the need to connect the first brake fluid port 51 of the brake master cylinder 200 to the first chamber 22 of the pedal simulator 2 through a separate pipeline during a mounting process, thereby simplifying a mounting procedure and reducing piping complexity of the brake system 500. In addition, a length of a connection flow path between the brake master cylinder 200 and the pedal simulator 2 is reduced, which lowers flow resistance of the brake fluid between the brake master cylinder 200 and the pedal simulator 2. This avoids an excessively stiff brake pedal feel, and further allows the movable piston 21 in the pedal simulator 2 to return more promptly, thereby reducing a risk of a brake failure.

To avoid a brake failure of the vehicle 600 due to a failure in a control system of the brake system 500, the brake master cylinder 200 may further be connected to the brake actuator unit 300 of the vehicle 600, to brake the vehicle 600 through hydraulic transmission.

Herein, a manner in which the first docking port 111 communicates with the first chamber 22 is not limited in the present disclosure. In an embodiment provided by the present disclosure, a first flow passage 12 communicating the first docking port 111 with the first chamber 22 may be provided in the base body 1. In another embodiment, the base body 1 may integrate a pipeline, and the first docking port 111 communicates with the first chamber 22 through the pipeline.

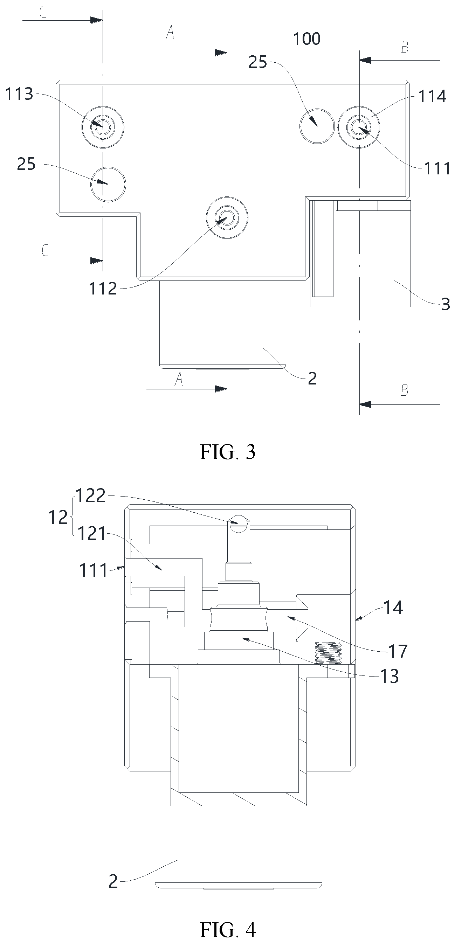

Optionally, as shown in FIG. 4, FIG. 13, and FIG. 14, the base body 1 is further provided with a first connection port 14, the first connection port 14 is configured to connect to the brake actuator unit 300, a second flow passage 17 is provided in the base body 1, one end of the second flow passage 17 communicates with the first docking port 111, and another end of the second flow passage 17 communicates with the first connection port 14. In this way, brake fluid flowing out from the brake master cylinder 200 can further flow to the brake actuator unit 300 through the first docking port 111, the second flow passage 17, and the first connection port 14, so that the vehicle 600 can be braked through hydraulic transmission when the control system fails.

It should be noted that an isolation valve for connecting or blocking the flow path is usually provided at the brake actuator unit 300, to disconnect the flow path between the first connection port 14 and the brake actuator unit 300 during normal operation of the control system, and connect the flow path between the first connection port 14 and the brake actuator unit 300 in case of an abnormality of the control system. In this way, a connection between the brake master cylinder 200 and the brake actuator unit 300 can be established to address a failure of the control system.

Optionally, as shown in FIG. 1 to FIG. 4, the pedal simulator module 100 may further include a switching valve 3, the switching valve 3 is mounted on the base body 1 and is configured to selectively connect or disconnect a flow path between the first docking port 111 and the first chamber 22. During normal operation of the control system, the switching valve 3 can be in an open state to connect the flow path between the first docking port 111 and the first chamber 22, to allow brake fluid to flow between the brake master cylinder 200 and the pedal simulator 2. In a case of an abnormality of the control system, the switching valve 3 can be in a closed state to disconnect the flow path between the first docking port 111 and the first chamber 22, so that brake fluid flowing out from the first brake fluid port 51 on the brake master cylinder 200 can flow directly to the brake actuator unit 300 of the vehicle 600, thereby ensuring the brake system 500 of the vehicle 600 to brake normally.

Optionally, as shown in FIG. 1, the switching valve 3 and the pedal simulator 2 may be mounted on a same side of the base body 1, so that the pedal simulator module 100 occupies smaller space, thereby facilitating installation of the pedal simulator module 100 on the brake master cylinder 200.

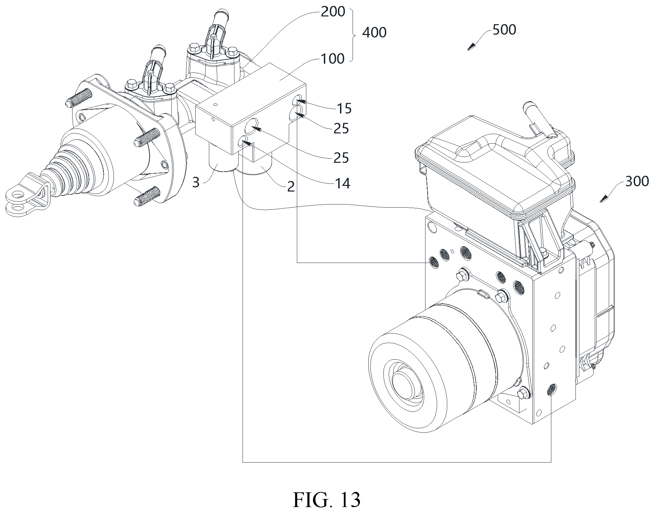

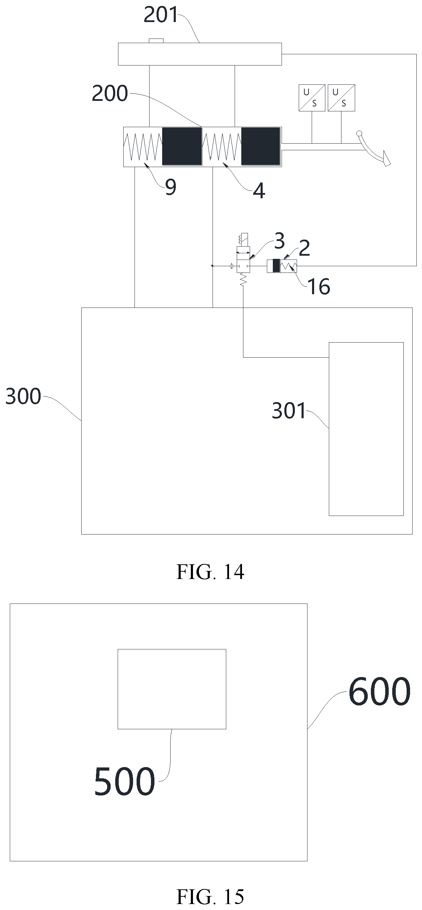

Optionally, as shown in FIG. 13 and FIG. 14, the switching valve 3 may be a solenoid valve. A communication port electrically connected to a control terminal of the solenoid valve is further formed on the switching valve 3. The communication port is configured to electrically connect to a control module 301 on the brake actuator unit 300.

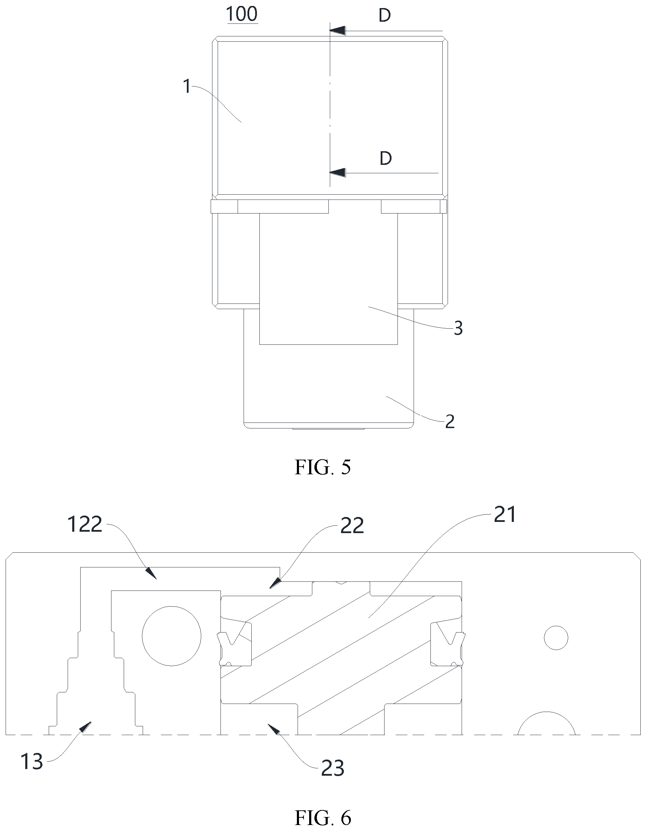

Optionally, as shown in FIG. 4 and FIG. 6, a first mounting cavity 13 and a first flow passage 12 are further provided in the base body 1. The first flow passage 12 includes a first sub-flow passage 121 and a second sub-flow passage 122. The first docking port 111 communicates with the first sub-flow passage 121, and the first chamber 22 communicates with the second sub-flow passage 122. An inlet of the switching valve 3 is located in the first mounting cavity 13 and communicates with the first sub-flow passage 121, and an outlet of the switching valve 3 is located in the first mounting cavity 13 and communicates with the second sub-flow passage 122. Brake fluid enters the first sub-flow passage 121 through the first docking port 111. The first sub-flow passage 121 communicates with the inlet of the switching valve 3. The brake fluid enters the switching valve 3, flows out from the outlet of the switching valve 3, and then enters the first chamber 22 through the second sub-flow passage 122. The first sub-flow passage 121 is used to communicate the first docking port 111 and the first mounting cavity 13, and the second sub-flow passage 122 is used to communicate the first mounting cavity 13 and the first chamber 22, so that brake fluid passes through the switching valve 3 during flowing. This enables the switching valve 3 to connect or disconnect the flow path between the first docking port 111 and the first chamber 22, thereby directing the brake fluid from the brake master cylinder 200 to different directions.

Optionally, as shown in FIG. 4, an end that is of the first sub-flow passage 121 and that is far away from the first docking port 111 communicates with the first mounting cavity 13, the inlet of the switching valve 3 communicates with the first mounting cavity 13, one end of the second flow passage 17 communicates with the first mounting cavity 13, and another end of the second flow passage 17 communicates with the first connection port 14. After brake fluid enters the first mounting cavity 13 through the first sub-flow passage 121, since the inlet of the switching valve 3 is located in the first mounting cavity 13 and communicates with the first mounting cavity 13, and the end of the second flow passage 17 also communicates with the first mounting cavity 13, the brake fluid can simultaneously enter the inlet of the switching valve 3 and the second flow passage 17.

The switching valve 3 can control whether the brake fluid entering through the inlet exits through the outlet, thereby controlling whether the brake fluid enters the first chamber 22. The brake fluid flowing into the second flow passage 17 can flow directly to the first connection port 14 and then flow into the brake actuator unit 300.

Optionally, as shown in FIG. 5 to FIG. 7, FIG. 10, and FIG. 11, the pedal simulator 2 further includes a second chamber 23 located on a side that is of the movable piston 21 and that faces away from the first chamber 22. The master cylinder docking port 11 further includes a second docking port 112. A third flow passage 18 is further provided in the base body 1. One end of the third flow passage 18 communicates with the second docking port 112, and another end of the third flow passage 18 communicates with the second chamber 23. The second docking port 112 is configured to dock with a second brake fluid port 52 on the brake master cylinder 200. The second brake fluid port 52 communicates with a fluid reservoir 201 through an oil guide groove 6 in the brake master cylinder 200. During operation of the pedal simulator 2, brake fluid flows into or out from the first chamber 22 through the first flow passage 12. The movable piston 21 moves under hydraulic pressure, and volumes of the first chamber 22 and the second chamber 23 continuously change. A reaction force felt by a driver on a pedal originates, on one hand, from a restoring force of an elastic member 16 disposed in the second chamber 23, and on the other hand, from fluid resistance of the brake fluid in the second chamber 23.

The third flow passage 18 is provided in the base body 1, so that the second chamber 23 communicates with the second brake fluid port 52 on the brake master cylinder 200 through the third flow passage 18 and further communicates with the fluid reservoir 201, which allows brake fluid in the second chamber 23 to enter or exit the second chamber 23 as a volume of the chamber changes. This ensures that a sufficient amount of brake fluid is always maintained in the second chamber 23 to support the movable piston 21, thereby providing the driver with improved pedal feel experience.

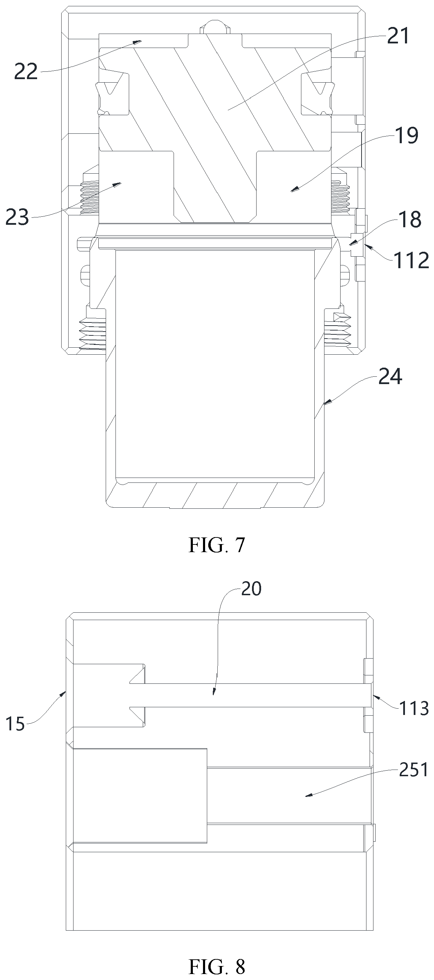

To improve integration of the pedal simulator module 100, optionally, as shown in FIG. 7, a second mounting cavity 19 is further provided in the base body 1. The pedal simulator 2 includes a cylinder body 24. The movable piston 21 is movably mounted in the second mounting cavity 19. At least a part of the cylinder body 24 is located in the second mounting cavity 19. One side of the movable piston 21 and a cavity wall of the second mounting cavity 19 together define the first chamber 22, and another side of the movable piston 21, the cavity wall of the second mounting cavity 19, and the cylinder body 24 together define the second chamber 23. The cavity wall of the second mounting cavity 19 and the cylinder body 24 can together define a range of motion for the movable piston 21. This range of motion is divided by the movable piston 21 into the first chamber 22 and the second chamber 23.

Machining costs can be reduced through cooperation of the base body 1 and the cylinder body 24 to jointly form the range of motion for the movable piston 21 of the pedal simulator 2. In addition, the second mounting cavity 19 can be manufactured while manufacturing the base body 1, which enhances integration between the pedal simulator 2 and the base body 1, thereby further reducing space occupied by the pedal simulator 2.

Optionally, the cylinder body 24 can be detachably connected to the base body 1. The present disclosure does not limit a connection manner between the cylinder body 24 and the base body 1, for example, the cylinder body 24 and the base body 1 may be connected through snap-fitting, threaded connection, or press-fitting.

Optionally, the pedal simulator 2 further includes an elastic member 16. The elastic member 16 is located in the second mounting cavity 19, one end of the elastic member 16 is connected to the movable piston 21, and another end of the elastic member 16 is connected to the cylinder body 24. The elastic member 16 disposed in the second mounting cavity 19 can provide a restoring force for the movable piston 21, thereby causing the movable piston 21 to move in a direction towards the first chamber 22, allowing the brake pedal to reset to obtain a new brake stroke.

The present disclosure does not limit a type of the elastic member 16, and the elastic member 16 may be, for example, a spring or an elastic block.

To connect the second fluid chamber 9 of the brake master cylinder 200 to the brake actuator unit 300, in an embodiment provided by the present disclosure, as shown in FIG. 1 and FIG. 8, the master cylinder docking port 11 further includes a third docking port 113. The third docking port 113 is configured to dock with a third brake fluid port 53 on the brake master cylinder 200. The third brake fluid port 53 communicates with the second fluid chamber 9 in the brake master cylinder 200. The base body 1 is further provided with a second connection port 15. The second connection port 15 is configured to connect to the brake actuator unit 300. A fourth flow passage 20 is further provided in the base body 1. The third docking port 113 communicates with the second connection port 15 through the fourth flow passage 20.

The brake master cylinder 200 includes the first fluid chamber 4 and the second fluid chamber 9, respectively. The first fluid chamber 4 is docked with the first docking port 111 on the base body 1 through the first brake fluid port 51, to direct brake fluid from the first fluid chamber 4 into the switching valve 3. This allows the first fluid chamber 4 to be simultaneously connected to both the pedal simulator 2 and the brake actuator unit 300. The pedal simulator 2 can provide pedal feedback to the driver. Direct connection between the brake actuator unit 300 and the first fluid chamber 4 enables the brake actuator unit 300 to operate in a case of a failure of the control system.

The second fluid chamber 9 is connected to the brake actuator unit 300 through the third brake fluid port 53. The third docking port 113 on the base body 1, the fourth flow passage 20 communicating with the third docking port 113, and the second connection port 15 are disposed, so that a flow path between the second fluid chamber 9 and the brake actuator unit 300 can be established through the base body 1. With this design, integration of the pedal simulator module 100 is improved, and use of pipelines is reduced, thereby lowering installation and maintenance costs of the brake system 500.

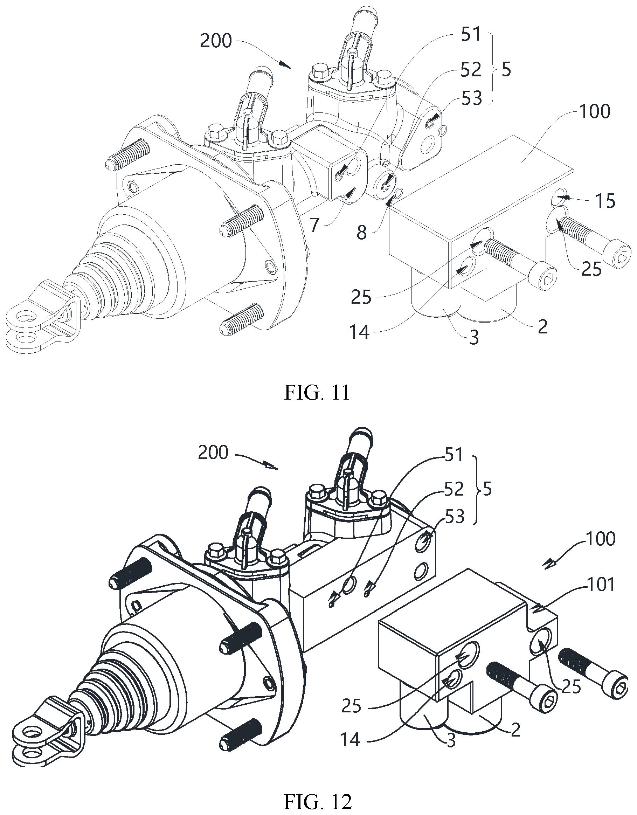

In another embodiment of the present disclosure, as shown in FIG. 12, the base body 1 is provided with an avoidance notch 101. The avoidance notch 101 is configured to expose the third brake fluid port 53 that is on the brake master cylinder 200 and that communicates with the second fluid chamber 9 in the brake master cylinder 200, for the third brake fluid port 53 to be connected to the brake actuator unit 300 through a pipeline.

Optionally, the foregoing plurality of master cylinder docking ports 11 may be located on a same side of the base body 1. This facilitates respective direct docking of the plurality of master cylinder docking ports 11 with corresponding brake fluid port 5 on the brake master cylinder 200, which is beneficial for reducing an installation difficulty of the pedal simulator module 100 and shortening a flow path length for brake fluid. It can be understood that the plurality of master cylinder docking ports 11 may include the first docking port 111, the second docking port 112, and the third docking port 113, and the brake fluid ports 5 may include the first brake fluid port 51, the second brake fluid port 52, and the third brake fluid port 53.

To enhance mating between the pedal simulator module 100 and the brake master cylinder 200, optionally, as shown in FIG. 1 and FIG. 3, the base body 1 has a first abutment surface 10 configured to abut against the brake master cylinder 200. The master cylinder docking port 11 is located on the first abutment surface 10, and the first abutment surface 10 is formed as a planar surface.

All of the plurality of master cylinder docking ports 11 are located on the first abutment surface 10, and the first abutment surface 10 is a planar surface. A planar surface configured to mate with the first abutment surface 10 can be provided on the brake master cylinder 200, so that direct mating between the pedal simulator 2 and the brake master cylinder 200 can be achieved through the first abutment surface 10. In addition, because the first abutment surface 10 is a planar surface, a gap between the master cylinder docking port 11 and the brake fluid docking port can be reduced, thereby improving mating tightness between the pedal simulator module 100 and the brake master cylinder 200, and lowering a probability of fluid leakage.

To improve sealing of connection, optionally, as shown in FIG. 1 and FIG. 3, the base body 1 is provided with a seal groove 114. The seal groove 114 is located outside the master cylinder docking port 11 and surrounds the master cylinder docking port 11. The seal groove 114 is configured to mount a seal ring 8 in the seal groove 114. Since the base body 1 is connected to the brake master cylinder 200 through the master cylinder docking port 11, disposing the surrounding seal groove 114 outside the master cylinder docking port 11 and mounting a seal ring 8 in the seal groove 114 can reduce a gap between the master cylinder docking port 11 and the corresponding brake fluid port on the brake master cylinder 200, thereby mitigating a risk of fluid leakage during use.

Optionally, as shown in FIG. 3, the base body 1 may be provided with a mounting part 25. The mounting part 25 enables the base body 1 to be detachably connected to the brake master cylinder 200. This allows for adjustment or replacement of different pedal simulator modules 100 based on different requirements. The mounting part 25 can reduce a mounting difficulty and lower adjustment costs.

It should be noted here that the present disclosure does not limit a specific structure of the mounting part 25. For example, the mounting part 25 may be a snap-fit part, that is, the mounting part 25 is a snap fastener disposed on the base body 1, and a locking part configured to engage with the snap fastener is formed on the brake master cylinder 200, thereby connecting the pedal simulator module 100 to the brake master cylinder 200.

In another embodiment, the mounting part 25 may be a mounting hole 251 formed on the base body 1. The mounting hole 251 is configured for a fastener to pass through, and the fastener can connect the pedal simulator module 100 to the brake master cylinder 200.

It should be noted here that the present disclosure does not limit a type of fastener, and the fastener may be, for example, a bolt or a rivet.

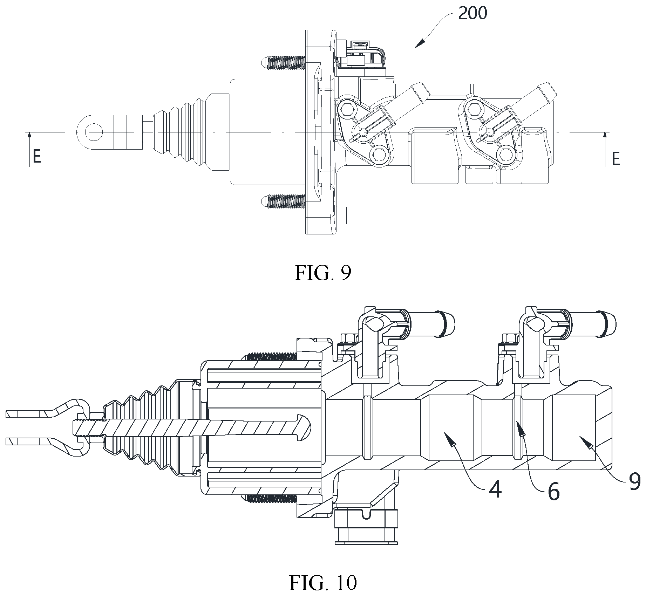

As a second aspect of the present disclosure, as shown in FIG. 9 to FIG. 12, the present disclosure further provides a brake master cylinder assembly 400, including a brake master cylinder 200 and the foregoing pedal simulator module 100. A first fluid chamber 4 is disposed in the brake master cylinder 200. The brake master cylinder 200 is provided with at least one brake fluid port 5. The brake fluid port 5 includes a first brake fluid port 51 communicating with the first fluid chamber 4. The base body 1 of the pedal simulator module 100 is mounted on the brake master cylinder 200, and the first docking port 111 on the base body 1 is docked with the first brake fluid port 51. The brake master cylinder 200 can communicate with the pedal simulator 2 through the first brake fluid port 51, to convey a hydraulic pressure change from the brake master cylinder 200 to the pedal simulator 2, and convey feedback from the pedal simulator 2 to the brake master cylinder 200, so that the driver obtains pedal feel feedback.

Further, the pedal simulator module 100 is independently disposed. During hardware development based on different pedal feel requirements, only corresponding adjustments need to be performed on the pedal simulator module 100, without the need to redesign the entire brake master cylinder assembly 400. This lowers development costs and shortens a development cycle.

In addition, since the switching valve 3 is usually manufactured by using a crimping and sealing process, which imposes a higher material requirement on the base body 1, a high-performance aluminum alloy can be used to manufacture the base body 1. By separately disposing the brake master cylinder 200 and the pedal simulator module 100, the brake master cylinder 200 can be made from a more cost-effective cast aluminum material. Compared to an integrally formed brake master cylinder assembly 400, this helps reduce material costs.

Optionally, as shown in FIG. 10, FIG. 11, and FIG. 14, the brake fluid port 5 may further include a second brake fluid port 52. An oil guide groove 6 is disposed in the brake master cylinder 200. The second brake fluid port 52 communicates with a fluid reservoir 201 through the oil guide groove 6. The pedal simulator 2 further includes a second chamber 23 located on a side that is of the movable piston 21 and that faces away from the first chamber 22. The second brake fluid port 52 communicates with the second chamber 23. The brake master cylinder 200 includes the first fluid chamber 4 and the second fluid chamber 9, respectively. During operation of the pedal simulator 2, brake fluid flows into or out from the first chamber 22 through the first flow passage 12, and flows into or out from the second chamber 23 through the third flow passage 18. The movable piston 21 moves under hydraulic pressure, and volumes of the first chamber 22 and the second chamber 23 increase or decrease.

In this process, brake fluid can flow into or out from the first fluid chamber 4 through the first brake fluid port 51, thereby entering or exiting the first chamber 22. In addition, because the oil guide groove 6 is disposed in the brake master cylinder 200, as the volume of the second chamber 23 increases or decreases, brake fluid can be directed into the oil guide groove 6 through the second brake fluid port 52 communicating with the second chamber 23, and then enters the fluid reservoir 201, or flow from the fluid reservoir 201 into the second chamber 23, to maintain hydraulic balance in chambers on two sides of the movable piston 21.

Optionally, as shown in FIG. 11 to FIG. 14, the brake fluid port 5 may further include a third brake fluid port 53. A second fluid chamber 9 communicating with the third brake fluid port 53 is disposed in the brake master cylinder 200. The third brake fluid port 53 is configured to connect to a brake actuator unit 300. To ensure normal operation of the brake unit, the second fluid chamber 9 can be connected to the brake actuator unit 300 through the third brake fluid port 53. This ensures that the brake master cylinder 200 can generate hydraulic pressure required for the brake actuator unit 300 to operate in a case of a failure in the first fluid chamber 4 of the brake master cylinder 200.

Optionally, as shown in FIG. 11, the brake master cylinder 200 includes a second abutment surface 7 configured to mate with the first abutment surface 10 on the base body 1. The brake fluid port 5 is located on the second abutment surface 7, and the second abutment surface 7 is formed as a planar surface. For embodiments in which there are a plurality of brake fluid ports 5, the first brake fluid port 51, the second brake fluid port 52, and the third brake fluid port 53 are all located on the second abutment surface 7 and are in a one-to-one correspondence with the first docking port 111, the second docking port 112, and the third docking port 113.

The base body 1 of the pedal simulator 2 may include a first abutment surface 10, and the first abutment surface 10 can be formed as a planar surface. A plurality of master cylinder docking ports 11 are all located on the first abutment surface 10. Since both the first abutment surface 10 and the second abutment surface 7 are planar surfaces, gaps between the plurality of master cylinder docking ports 11 located on the first abutment surface 10 and the plurality of brake fluid ports 5 located on the second abutment surface 7 are smaller, thereby reducing a risk of fluid leakage.

Optionally, as shown in FIG. 11, the first brake fluid port 51, the second brake fluid port 52, and the third brake fluid port 53 may each be provided with a corresponding second abutment surface 7. A second abutment surface 7 corresponding to the first brake fluid port 51, a second abutment surface 7 corresponding to the second brake fluid port 52, and a second abutment surface 7 corresponding to the third brake fluid port 53 are flush with each other. Alternatively, as shown in FIG. 12, the first brake fluid port 51, the second brake fluid port 52, and the third brake fluid port 53 are located on a same second abutment surface 7.

According to a third aspect provided by the present disclosure, as shown in FIG. 13 and FIG. 14, the present disclosure provides a brake system 500, including the foregoing brake master cylinder 200 assembly and the brake actuator unit 300.

According to a fourth aspect provided by the present disclosure, as shown in FIG. 15, the present disclosure provides a vehicle 600, including the foregoing brake system 500.

The foregoing describes in detail preferred implementations of the present disclosure with reference to the accompanying drawings. However, the present disclosure is not limited to specific details in the foregoing implementations. Multiple simple variations can be made to the technical solutions of the present disclosure within the technical concept scope of the present disclosure, and all these simple variations fall within the protection scope of the present disclosure.

In addition, it should be noted that the specific technical features described in the foregoing specific implementations may be combined in any suitable manner without a contradiction. To avoid unnecessary repetition, various possible combination manners are not otherwise described in the present disclosure.

In addition, various different implementations of the present disclosure may be combined arbitrarily, and the combination shall also be considered as the content disclosed in the present disclosure, provided that the combination is not contrary to the idea of the present disclosure.

## Claims

1. A pedal simulator module (100), comprising:
a base body (1), configured to be mounted on a brake master cylinder (200), the base body (1) being provided with at least one master cylinder docking port (11), the master cylinder docking port (11) comprising a first docking port (111), the first docking port (111) being configured to dock with a first brake fluid port (51) on the brake master cylinder (200), and the first brake fluid port (51) communicating with a first fluid chamber (4) in the brake master cylinder (200); and
a pedal simulator (2), comprising a movable piston (21) and a first chamber (22) located on one side of the movable piston (21), the pedal simulator (2) being mounted on the base body (1), and the first docking port (111) communicating with the first chamber (22).

2. The pedal simulator module (100) according to claim 1, wherein the pedal simulator module (100) further comprises a switching valve (3), the switching valve (3) is mounted on the base body (1) and is configured to selectively connect or disconnect a flow path between the first docking port (111) and the first chamber (22).

3. The pedal simulator module (100) according to claim 2, wherein a first mounting cavity (13) and a first flow passage (12) are further provided in the base body (1), wherein the first flow passage (12) comprises a first sub-flow passage (121) and a second sub-flow passage (122), the first docking port (111) communicates with the first sub-flow passage (121), the first chamber (22) communicates with the second sub-flow passage (122), an inlet of the switching valve (3) is located in the first mounting cavity (13) and communicates with the first sub-flow passage (121), and an outlet of the switching valve (3) is located in the first mounting cavity (13) and communicates with the second sub-flow passage (122).

4. The pedal simulator module (100) according to claim 3, wherein the base body (1) is further provided with a first connection port (14), the first connection port (14) is configured to connect to a brake actuator unit (300), and a second flow passage (17) is further provided in the base body (1); and
an end that is of the first sub-flow passage (121) and that is far away from the first docking port (111) communicates with the first mounting cavity (13), the inlet of the switching valve (3) communicates with the first mounting cavity (13), one end of the second flow passage (17) communicates with the first mounting cavity (13), and another end of the second flow passage (17) communicates with the first connection port (14).

5. The pedal simulator module (100) according to any one of claims 1 to 4, wherein the base body (1) is further provided with the first connection port (14), the first connection port (14) is configured to connect to the brake actuator unit (300), the second flow passage (17) is provided in the base body (1), one end of the second flow passage (17) communicates with the first docking port (111), and another end of the second flow passage (17) communicates with the first connection port (14).

6. The pedal simulator module (100) according to any one of claims 1 to 5, wherein the pedal simulator (2) further comprises a second chamber (23) located on a side that is of the movable piston (21) and that faces away from the first chamber (22), the master cylinder docking port (11) further comprises a second docking port (112), a third flow passage (18) is further provided in the base body (1), one end of the third flow passage (18) communicates with the second docking port (112), another end of the third flow passage (18) communicates with the second chamber (23), the second docking port (112) is configured to dock with a second brake fluid port (52) on the brake master cylinder (200), and the second brake fluid port (52) communicates with a fluid reservoir (201) through an oil guide groove (6) in the brake master cylinder (200).

7. The pedal simulator module (100) according to claim 6, wherein a second mounting cavity (19) is further provided in the base body (1), the pedal simulator (2) comprises a cylinder body (24), the movable piston (21) is movably mounted in the second mounting cavity (19), at least a part of the cylinder body (24) is located in the second mounting cavity (19), one side of the movable piston (21) and a cavity wall of the second mounting cavity (19) together define the first chamber (22), and another side of the movable piston (21), the cavity wall of the second mounting cavity (19), and the cylinder body (24) together define the second chamber (23).

8. The pedal simulator module (100) according to claim 7, wherein the pedal simulator (2) further comprises an elastic member (16), the elastic member (16) is located in the second mounting cavity (19), one end of the elastic member (16) is connected to the movable piston (21), and another end of the elastic member (16) is connected to the cylinder body (24).

9. The pedal simulator module (100) according to any one of claims 1 to 8, wherein the master cylinder docking port (11) further comprises a third docking port (113), the third docking port (113) is configured to dock with a third brake fluid port (53) on the brake master cylinder (200), the third brake fluid port (53) communicates with a second fluid chamber (9) in the brake master cylinder (200), the base body (1) is further provided with a second connection port (15), the second connection port (15) is configured to connect to the brake actuator unit (300), a fourth flow passage (20) is provided in the base body (1), and the third docking port (113) communicates with the second connection port (15) through the fourth flow passage (20); or
the base body (1) is provided with an avoidance notch (101), the avoidance notch (101) is configured to expose the third brake fluid port (53) that is on the brake master cylinder (200) and that communicates with the second fluid chamber (9) in the brake master cylinder (200), for the third brake fluid port (53) to be connected to the brake actuator unit (300) through a pipeline.

10. The pedal simulator module (100) according to any one of claims 2 to 4, wherein the switching valve (3) and the pedal simulator (2) are mounted on a same side of the base body (1).

11. The pedal simulator module (100) according to any one of claims 1 to 10, wherein there are a plurality of master cylinder docking ports (11), and the plurality of master cylinder docking ports (11) are located on a same side of the base body (1).

12. The pedal simulator module (100) according to any one of claims 1 to 11, wherein the base body (1) comprises a first abutment surface (10) configured to abut against the brake master cylinder (200), the master cylinder docking port (11) is located on the first abutment surface (10), and the first abutment surface (10) is formed as a planar surface.

13. The pedal simulator module (100) according to any one of claims 1 to 12, wherein the base body (1) is provided with a seal groove (114), the seal groove (114) is located outside the master cylinder docking port (11) and surrounds the master cylinder docking port (11), and the seal groove (114) is configured to mount a seal ring (8) in the seal groove (114).

14. The pedal simulator module (100) according to any one of claims 1 to 13, wherein the base body (1) is provided with a mounting part (25), and the mounting part (25) enables the base body (1) to be detachably connected to the brake master cylinder (200).

15. The pedal simulator module (100) according to claim 14, wherein the mounting part (25) is a mounting hole (251) formed on the base body (1), and the mounting hole (251) is configured for a fastener to pass through.

16. A brake master cylinder assembly (400), comprising a brake master cylinder (200) and the pedal simulator module (100) according to any one of claims 1 to 15, a first fluid chamber (4) being disposed in the brake master cylinder (200), the brake master cylinder (200) being provided with at least one brake fluid port (5), the brake fluid port (5) comprising a first brake fluid port (51) communicating with the first fluid chamber (4), the base body (1) of the pedal simulator module (100) being mounted on the brake master cylinder (200), and the first docking port (111) on the base body (1) being docked with the first brake fluid port (51).

17. The brake master cylinder assembly (400) according to claim 16, wherein the brake fluid port (5) further comprises a second brake fluid port (52), an oil guide groove (6) is disposed in the brake master cylinder (200), the second brake fluid port (52) communicates with a fluid reservoir (201) through the oil guide groove (6), the pedal simulator (2) further comprises a second chamber (23) located on a side that is of the movable piston (21) and that faces away from the first chamber (22), and the second brake fluid port (52) communicates with the second chamber (23); and/or the brake fluid port (5) further comprises a third brake fluid port (53), a second fluid chamber (9) communicating with the third brake fluid port (53) is disposed in the brake master cylinder (200), and the third brake fluid port (53) is configured to connect to a brake actuator unit (300).

18. The brake master cylinder assembly (400) according to claim 16 or 17, wherein the brake master cylinder (200) comprises a second abutment surface (7) configured to abut against the base body (1), the brake fluid port (5) is located on the second abutment surface (7), and the second abutment surface (7) is formed as a planar surface.

19. A brake system (500), comprising the brake master cylinder assembly (400) and the brake actuator unit (300) according to any one of claims 16 to 18.

20. A vehicle (600), comprising the brake system (500) according to claim 19.
